# FASCICULE DE BREVET EUROPEEN

(11) **EP 3 368 269 B1**
(45) Date de publication et mention de la délivrance du brevet: **02.02.2022**
(21) Numéro de dépôt: 16806235.4
(22) Date de dépôt: 27.10.2016
(51) Int. Cl.: B29C 48/07, B29C 48/12, B29C 53/78, F02K 9/34

(54) **DISPOSITIF D'EXTRUSION D'UNE BANDE DE MATÉRIAU ÉLASTOMÈRE ET PROCÉDÉ DE RÉALISATION D'UN REVÊTEMENT DE PROTECTION THERMIQUE D'UN CORPS DE PROPULSEUR**
VORRICHTUNG ZUM EXTRUDIEREN EINES STREIFENS AUS ELASTOMERMATERIAL UND VERFAHREN ZUR HERSTELLUNG EINER HITZESCHILDABDECKUNG FÜR EINEN SCHUBKÖRPER
DEVICE FOR EXTRUDING A STRIP OF ELASTOMERIC MATERIAL AND METHOD FOR PRODUCING A HEAT SHIELD COVERING FOR A THRUSTER BODY

(30) Priorité: 30.10.2015 FR 1560403
(43) Date de publication de la demande: 05.09.2018
(73) Titulaire: ArianeGroup SAS, 78130 Les Mureaux (FR)
(72) Inventeur: VENNET, Caroline, 33110 Le Bouscat (FR); BORIE, Edouard, 33320 Eysines (FR); RODOLAUSSE, Julien, 33127 Martignas Sur Jalles (FR); LASSALLE, Pierre, 33160 Saint Medard En Jalles (FR); MUNOZ, Matthieu, 33160 Saint Medard En Jalles (FR); BOIRIE, Johan, 33160 Cestas (FR)
(74) Mandataire: Cabinet Beau de Loménie
(86) Numéro de dépôt international: PCT/FR2016/052805
(87) Numéro de publication internationale: WO 2017/072458

(56) Documents cités:
- EP-A1- 0 410 852
- EP-A1- 2 633 984
- EP-A2- 1 623 821
- FR-A1- 2 673 141
- JP-A- 2001 191 423
- US-A- 5 348 810
- US-A1- 2006 073 282
- US-A1- 2010 032 072

## Description

### Arrière-plan de l'invention

La présente invention est relative à un dispositif et procédé de fabrication d'une bande en matériau élastomère destinée à la réalisation d'un revêtement de protection thermique interne et/ou externe d'un propulseur notamment un propulseur à propergol solide. Elle vise, par conséquent, également un procédé de réalisation d'un corps de propulseur et le corps de propulseur ainsi réalisé.

Le corps d'un propulseur à propergol solide se compose essentiellement d'une enveloppe résistante, par exemple en matériau composite, habituellement munie d'un revêtement interne de protection thermique qui doit remplir trois fonctions essentielles : protéger thermiquement l'enveloppe résistante en composite de l'agression des gaz chauds résultant de la combustion du propergol, atténuer les contraintes mécaniques engendrées par la déformation sous pression de l'enveloppe résistante pendant la phase de combustion du propergol, et assurer l'étanchéité de l'enveloppe résistante contre les fuites de gaz.

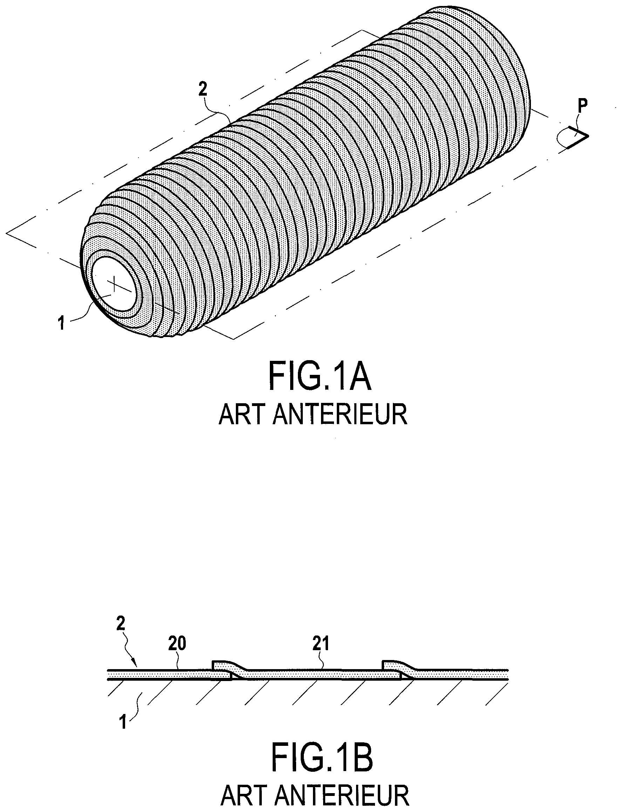

Il existe différents procédés pour appliquer les revêtements de protection thermique à l'intérieur de l'enveloppe résistante de la structure de propulseur. L'un d'entre eux consiste à recouvrir un mandrin d'une couche d'élastomère avant de former l'enveloppe résistante de la structure du propulseur par enroulement filamentaire d'un matériau composite. Selon un tel procédé, la couche d'élastomère est réalisée par dépose d'une bande extrudée sur toute la surface externe d'un mandrin en rotation. Le revêtement ainsi obtenu est alors vulcanisé en autoclave avant l'enroulement filamentaire. Bien qu'un tel procédé permette de simplifier le procédé de réalisation du revêtement interne de protection thermique, il requiert un usinage supplémentaire du revêtement ainsi formé afin d'obtenir un état de surface satisfaisant. En effet, lors du bobinage de la bande d'élastomère sur le mandrin, on dépose la bande de manière à ce que les spires adjacentes se chevauchent partiellement afin d'assurer une continuité du matériau élastomère dans le revêtement de protection thermique. Un exemple est illustré sur les figures 1A et 1B qui montrent un mandrin 1 sur lequel est bobinée une bande de matériau élastomère 2. Chaque spire de bande 2 est déposée de manière à chevaucher partiellement la spire précédente comme c'est le cas sur la figure 1 pour la spire 21 qui est déposée de manière à chevaucher partiellement la spire précédente 20. Comme on peut le voir sur la figure 1B au niveau des spires déjà déposées, le revêtement résultant présente un état de surface très irrégulier du fait des chevauchements entre les bords de deux spires adjacentes. Le contrôle dimensionnel du revêtement de protection thermique, en particulier en ce qui concerne son épaisseur, ne peut être obtenu directement après le dépôt de la bande de matériau élastomère puisque l'épaisseur du revêtement ainsi obtenu varie du simple au double entre les parties du revêtement constituées par une seule spire de bande et les parties de chevauchement entre deux spires adjacentes.

Dans ce cas, une étape d'usinage est nécessaire pour ajuster l'épaisseur et l'état de surface du revêtement, ce qui complexifie la fabrication du revêtement et entraîne une perte de matière. Le coût de fabrication du corps de propulseur résultant est, par conséquent, augmenté.

Les documents FR 2 673 141 et EP 0 410 852 divulguent des filières pour la production d'une bande en matériau élastomère. Dans ces documents, la forme et les dimensions de la bande d'élastomère produite est ajustée par des galets rotatifs positionnés à la sortie d'une extrudeuse. Cette technique de production présente des inconvénients. Un premier inconvénient concerne la mise en forme de la bande d'élastomère par calandrage, c'est-à-dire au moyen des galets rotatifs. En effet, l'utilisation de galets mobiles pour la mise en forme et en dimensions de la bande d'élastomère entraîne forcément la présence de jeux entre les galets adjacents ou entre un galet et une pièce fixe adjacente. Cela résulte en un manque de maîtrise de la forme et/ou des dimensions de la bande et en particulier au niveau de ses bords. En outre, dans les documents FR 2 673 141 et EP 0 410 852, l'élastomère est mis en forme de bande dès sa sortie de l'extrudeuse et déposé sur son support au plus près de sa sortie des galets de calandrage. Dans ce cas, l'élastomère est fortement contraint et a tendance à gonfler et se déformer après sa dépose. Ces variations dimensionnelles non maîtrisées conduisent à la formation d'un revêtement de mauvaise qualité qui nécessite des étapes d'usinage ultérieures pour ajuster l'épaisseur et l'état de surface du revêtement.

Les documents EP 2 633 984 A1, US 2010/032072 A1, EP 1 623 821 A2 et JP 2001 191423 A divulguent également des filières pour la production d'une bande en matériau élastomère.

### Objet et résumé de l'invention

La présente invention vise donc à pallier de tels inconvénients en proposant un dispositif d'extrusion destiné à la fabrication d'une bande continue d'un produit profilé en matériau élastomère selon la revendication 1.

Avec un tel orifice de sortie, il est ainsi possible de fabriquer une bande de matériau élastomère qui présente des bords en forme de biseau, les bords de deux spires jointives d'une telle bande pouvant alors se chevaucher sans augmentation d'épaisseur ni dégradation de l'état de surface du revêtement de protection thermique tout en assurant une continuité dans le revêtement de protection thermique ainsi formé. En effet, contrairement à l'art antérieur où la bande d'élastomère est mise en forme par calandrage, l'orifice de sortie de la filière du dispositif d'extrusion de l'invention est uniquement défini par des surfaces statiques, ce qui permet une plus grande précision dans la mise en forme de la bande notamment par l'absence de jeux entre les éléments constituant l'orifice de sortie de la filière.

Selon une autre caractéristique particulière du dispositif de l'invention, celui-ci comprend une tête d'extrusion comportant une première extrémité reliée à la sortie du corps fixe et une deuxième extrémité comportant la filière d'extrusion, la tête d'extrusion comprenant un premier conduit divergent en communication avec la sortie du corps fixe et un deuxième conduit convergent prolongeant le premier conduit jusqu'à l'orifice de sortie de la filière. Une telle tête d'extrusion permet de contraindre très progressivement le matériau élastomère entre sa sortie de l'extrudeuse et son passage dans l'orifice de sortie de la filière. On évite ainsi que la bande d'élastomère se déforme et/ou gonfle après son passage dans l'orifice de sortie de la filière. Les dimensions et la géométrie de la bande d'élastomère sont encore mieux contrôlées.

Selon un aspect particulier, le premier conduit comporte un ou plusieurs éléments redresseurs aptes à interrompre la rotation d'un matériau en sortie du corps fixe, ce qui améliore encore le contrôle de la contrainte progressive du matériau dans la tête d'extrusion.

Selon un autre aspect particulier, le deuxième conduit comporte des première et deuxième portions convergentes, la première portion s'étendant entre le premier conduit et la deuxième portion, ladite deuxième portion s'étendant entre un orifice d'entrée relié à la première portion et l'orifice de sortie de la filière, l'orifice d'entrée présentant des dimensions supérieures à celles de l'orifice de sortie de la filière, la deuxième portion présentant une forme variant progressivement entre la forme de l'orifice d'entrée de ladite deuxième portion et l'orifice de sortie de la filière. Cette géométrie des conduits dans la tête d'extrusion facilite encore la contrainte progressive du matériau avant son passage dans l'orifice de sortie de la filière d'extrusion.

Selon un autre aspect particulier, les bords de l'orifice d'entrée de la deuxième portion peuvent présenter une forme évasée par rapport au centre de l'orifice d'entrée. On ralentit ainsi la vitesse de circulation du matériau élastomère circulant au niveau des bords de l'orifice d'entrée par rapport au centre dudit orifice. Cela permet d'homogénéiser la vitesse de circulation du matériau élastomère dans la suite de la deuxième portion car, comme celle-ci se rétrécie, le débit du matériau est accéléré au niveau des bords. Le débit du matériau est peu accéléré au niveau du centre de la deuxième portion car la géométrie varie peu à cet endroit. Selon une autre caractéristique particulière du dispositif de l'invention, l'orifice de sortie de la filière d'extrusion présente une forme de parallélogramme non rectangle comportant deux angles aigus compris entre 30° et 45°.

Selon une autre caractéristique particulière du dispositif de l'invention, l'orifice de sortie de la filière d'extrusion présente une forme de parallélogramme non rectangle dont la longueur de la base est comprise entre 30mm et 90mm et dont la hauteur est comprise entre 1,5 mm et 30 mm.

L'invention concerne aussi un procédé de fabrication d'un revêtement de protection thermique destiné à recouvrir une paroi interne ou externe d'un corps de propulseur selon la revendication 8.

Selon un autre caractéristique particulière du procédé de l'invention, celui-ci comprend une tête d'extrusion comportant une première extrémité reliée à la sortie du corps fixe et une deuxième extrémité comportant la filière d'extrusion, la tête d'extrusion comprenant un premier conduit divergent en communication avec la sortie du corps fixe et un deuxième conduit convergent prolongeant le premier conduit jusqu'à l'orifice de sortie de la filière.

Selon un aspect particulier, le premier conduit comporte un ou plusieurs éléments redresseurs aptes à interrompre la rotation d'un matériau en sortie du corps fixe, ce qui améliore encore le contrôle de la contrainte progressive du matériau dans la tête d'extrusion.

Selon un autre aspect particulier, le deuxième conduit comporte des première et deuxième portions convergentes, la première portion s'étendant entre le premier conduit et la deuxième portion, ladite deuxième portion s'étendant entre un orifice d'entrée relié à la première portion et l'orifice de sortie de la filière, l'orifice d'entrée présentant des dimensions supérieures à celles de l'orifice de sortie de la filière, la deuxième portion présentant une forme variant progressivement entre la forme de l'orifice d'entrée de ladite deuxième portion et l'orifice de sortie de la filière. Cette géométrie des conduits dans la tête d'extrusion facilite encore la contrainte progressive du matériau avant son passage dans l'orifice de sortie de la filière d'extrusion.

Selon un autre aspect particulier, les bords de l'orifice d'entrée de la deuxième portion peuvent présenter une forme évasée par rapport au centre de l'orifice d'entrée. On ralentit ainsi la vitesse de circulation du matériau élastomère circulant au niveau des bords de l'orifice d'entrée par rapport au centre dudit orifice. Cela permet d'homogénéiser la vitesse de circulation du matériau élastomère dans la suite de la deuxième portion car, comme celle-ci se rétrécie, le débit du matériau est accéléré au niveau des bords. Le débit du matériau est peu accéléré au niveau du centre de la deuxième portion car la géométrie varie peu à cet endroit.

Selon une caractéristique particulière du procédé de l'invention, l'orifice de sortie de la filière d'extrusion présente une forme de parallélogramme non rectangle comportant deux angles aigus compris entre 30° et 45°.

Selon une autre caractéristique particulière du procédé de l'invention, l'orifice de sortie de la filière d'extrusion présente une forme de parallélogramme non rectangle dont la longueur de la base est comprise entre 30mm et 90mm et dont la hauteur est comprise entre 1,5 mm et 30 mm.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- les figures 1A et 1B sont respectivement des vues schématiques en perspective et en coupe partielle d'un revêtement de protection thermique selon l'art antérieur,
- la figure 2 est une vue schématique en perspective d'une installation de fabrication d'un revêtement de protection thermique conformément à un mode de réalisation de l'invention,
- la figure 3 est une vue schématique en coupe montrant le dispositif d'extrusion utilisé dans l'installation de la figure 1,
- la figure 4 est une vue schématique en coupe et en perspective d'une tête d'extrusion conformément à un mode de réalisation de l'invention,
- les figures 5A à 5C sont des vues schématiques en perspective d'une plaque et de deux volets de la tête d'extrusion de la figure 4,
- les figures 6A à 6C sont des vues schématiques partielles en perspective d'une plaque et de deux volets de la tête d'extrusion de la figure 4,
- la figure 7 est une vue de face de la filière d'extrusion du dispositif d'extrusion de la figure 3 montrant la géométrie de l'orifice de sortie de la filière,
- la figure 8 est une vue schématique en section partielle montrant la disposition relative des spires jointives lors du dépôt par bobinage d'une bande de matériau élastomère selon l'invention,
- la figure 9 montre un corps de propulseur comprenant une enveloppe structurale munie d'un revêtement externe de protection thermique conformément à un mode de réalisation de l'invention, et
- la figure 10 un ensemble arrière de propulseur muni d'un revêtement externe de protection thermique conformément à un mode de réalisation de l'invention.

### Description détaillée de modes de réalisation

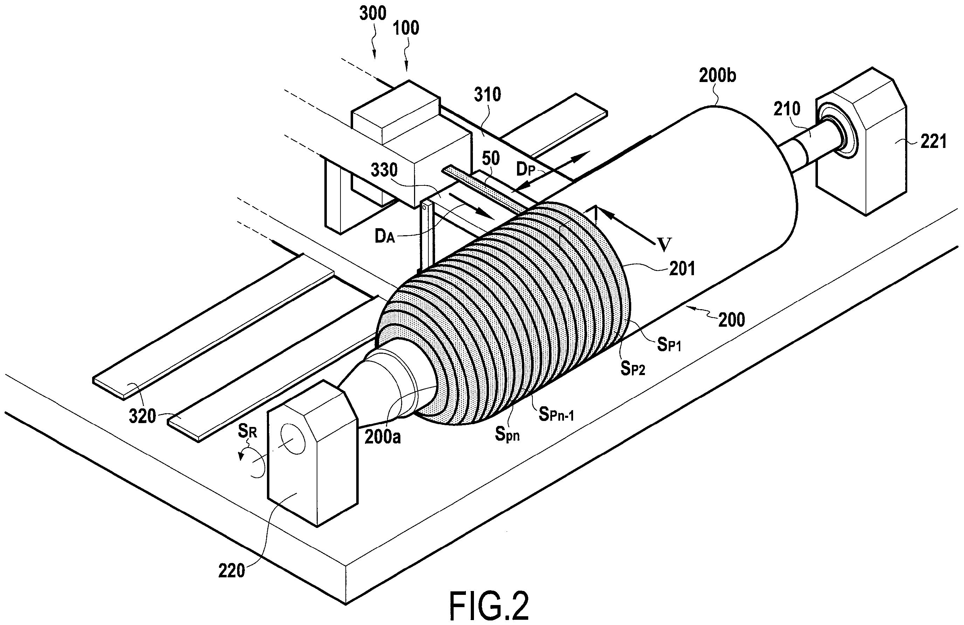

La figure 2 illustre une installation 300 permettant de fabriquer un revêtement de protection thermique en matériau élastomère pour un corps de propulseur. L'installation 300 comprend un dispositif d'extrusion 100 embarqué sur une plateforme chariot 310 et un mandrin 200, par exemple métallique, monté sur un arbre rotatif 210 supporté par deux broches 220 et 221 dont au moins l'une d'entre elle comprend un moteur (non représenté) pour entraîner en rotation le mandrin 200 dans le sens indiqué par la flèche S_{R} sur la figure 2. L'installation 300 comprend en outre des rails longitudinaux 320, parallèles au mandrin 200, sur lesquels repose la plateforme chariot 310, celle-ci étant apte à se déplacer longitudinalement sur les rails 320.

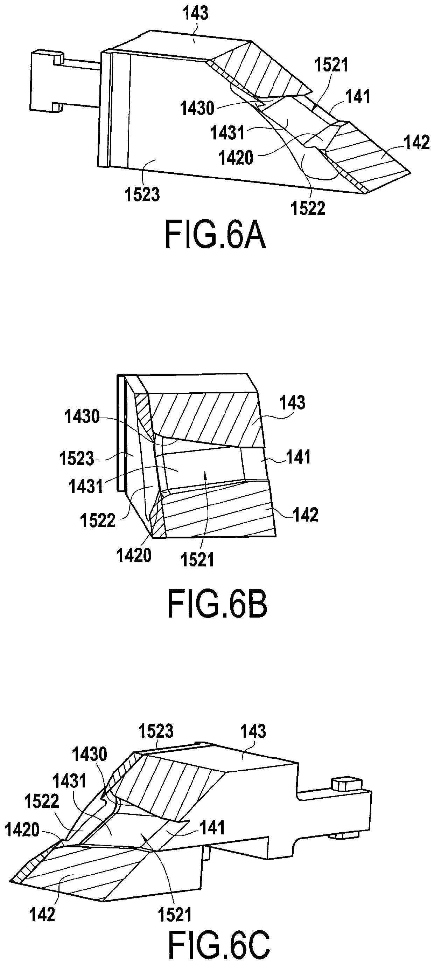

Comme représentée sur la figure 2, une bande continue d'un matériau élastomère 50 issue du dispositif d'extrusion 100 est déposée sur la surface externe du mandrin 200. La bande 50 est déposée par bobinage de spires jointives Sp1, Sp2, ..., Spn autour du mandrin 200, le bobinage débutant à partir d'une position intermédiaire 201 sur le mandrin 200 située entre la première extrémité 200a et la deuxième extrémité 200b du mandrin. Le bobinage de la bande 50 est poursuivi jusqu'à atteindre une des deux extrémités 200a et 200b du mandrin 200, ici l'extrémité 200a. Une fois cette première partie du revêtement de protection thermique réalisée, on reprend le bobinage de la bande 50 à partir de la position intermédiaire 201 que l'on poursuit jusqu'à l'autre extrémité du mandrin, ici l'extrémité 200b, afin de réaliser la deuxième partie du revêtement de protection thermique (non représentée sur la figure 2) permettant de finaliser la fabrication dudit revêtement sur l'ensemble du mandrin 200. Comme illustré sur la figure 6, on obtient alors un revêtement continu de protection thermique 60. Au fur et à mesure de l'avancement du bobinage, la plateforme chariot 310 se déplace longitudinalement dans une des deux directions indiquées par la double flèche D_{P} sur la figure 2.

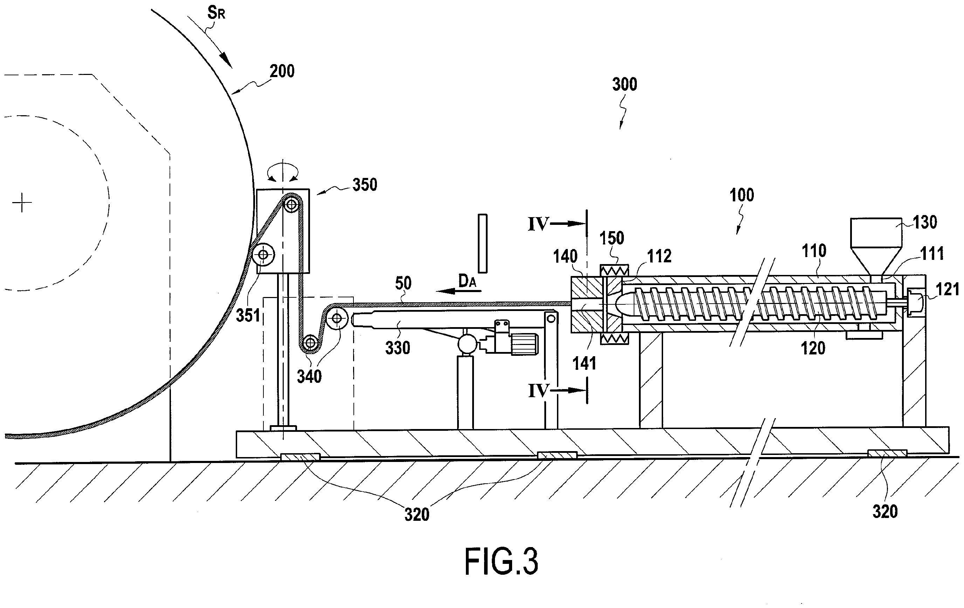

Sur la figure 3, le dispositif d'extrusion 100 comprend de manière connue en soi un corps fixe ou extrudeuse 110 renfermant une vis sans fin 120 entraînée en rotation par un moteur 121, une trémie d'alimentation 130 en communication avec l'entrée 111 du corps fixe 110 et une filière d'extrusion 140 en communication avec la sortie 112 du corps 110, la filière étant montée sur le corps 110 au moyen d'une tête d'extrusion 150. La bande en matériau élastomère 50 est obtenue à partir d'un matériau élastomère, par exemple sous forme de granulés ou de poudre de matériau élastomère, introduit dans le corps fixe 110 par la trémie d'alimentation. Le matériau élastomère peut par exemple être choisi parmi les matériaux EPDM (éthylène-propylène-diène monomère). La vis sans fin 120 malaxe, compresse, cisaille, échauffe et transporte en continu le matériau fluidifié et homogène vers la filière d'extrusion 140 qui confère au matériau fluidifié la forme désirée. Le corps fixe 110 est équipé de moyens de régulation de la température à l'intérieur de celui-ci (non représentés) afin de contrôler l'état du matériau fluidifié. Après son extrusion de la filière 140, la bande 50 est transportée suivant une direction d'avancée D_{A} jusqu'au mandrin 200 par un tapis de convoyage 330, des rouleaux de guidage 340 et une tête de dépose 350. La bande 50 est enroulée automatiquement sur le mandrin 200 à l'aide de la tête de dépose 350 qui comporte un galet 351 permettant d'exercer une pression de contact de la bande 50 sur le mandrin 200, pression qui permet à la bande 50 d'adhérer au mandrin lors de sa dépose. Le tapis de convoyage 330, les rouleaux de guidage 340 et la tête de dépose 350 déportée permettent de relâcher les contraintes dans la bande de matériau d'élastomère et de déposer celle-ci sur le mandrin sans tension. Cela permet de déposer des bandes de matériau élastomère ayant une très faible épaisseur, par exemple 1,5 mm, des bandes d'une telle épaisseur ne pouvant résister à l'application d'une tension. La tête de dépose 350 est en outre orientable de manière à positionner la bande 50 sensiblement parallèlement au plan local de dépose du mandrin. L'installation 300 comprend des moyens de contrôle (non représentés) du positionnement de la bande 50 sur le mandrin 200 afin de piloter l'ajustement des spires adjacentes.

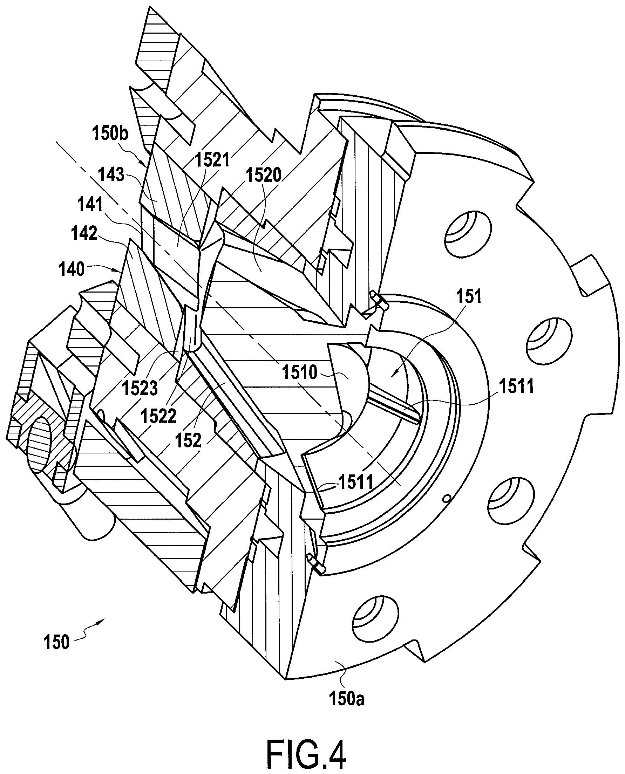

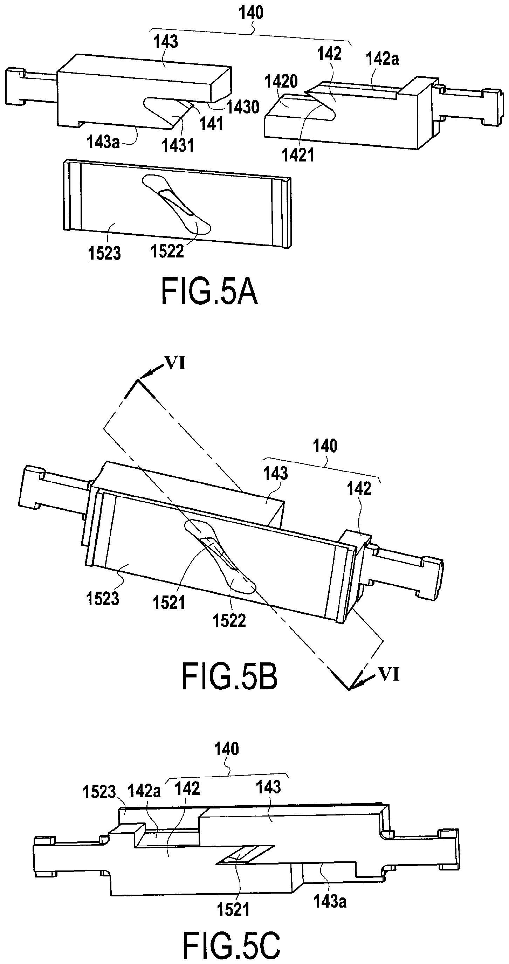

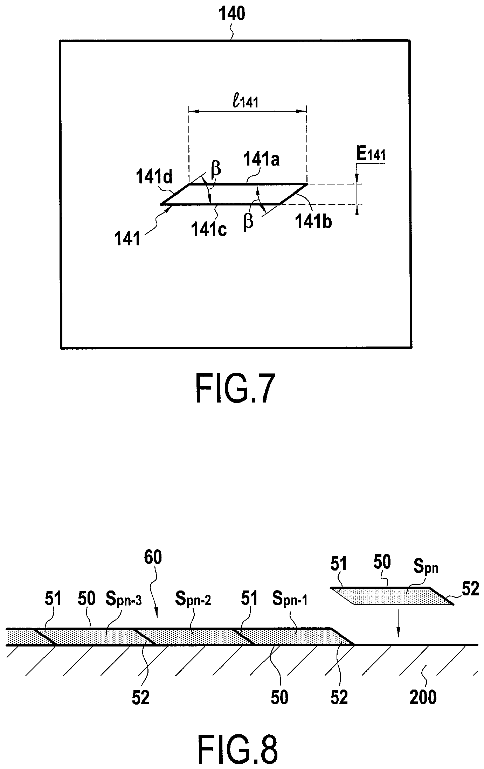

Conformément à l'invention, la filière d'extrusion 140 comprend un orifice de sortie 141 qui présente une forme de parallélogramme non rectangle comme représenté sur la figure 7. Toujours conformément à l'invention, la forme et les dimensions de l'orifice de sortie 141 sont définies par des surfaces statiques. On entend ici par « surface statique », une surface qui est immobile par rapport au matériau élastomère extrudé qui circule le long de cette surface par opposition à une surface mobile comme par exemple la surface d'un galet ou rouleau qui est mobile en rotation lors du passage du matériau extrudé. Dans l'exemple décrit ici et illustré notamment aux figures 4, 5A à 5C et 6A à 6C, la filière d'extrusion 140 comprend des premier et deuxième volets 142, 143 maintenus l'un contre l'autre. Le premier volet 142 comporte des première et deuxième surfaces statiques 1420 et 1421 formant entre elles un angle différent de 90° et, de préférence, un angle compris entre 30° et 45°. De même, le deuxième volet 143 comporte des première et deuxième surfaces statiques 1430 et 1431 formant entre elles un angle différent de 90° et, de préférence, un angle compris entre 30° et 45°. Les première et deuxième surfaces statiques 1420 et 1421 du premier volet 142 sont maintenues respectivement en vis-à-vis des première et deuxième surfaces statiques 1430 et 1431 du deuxième volet 143. L'extrémité libre 142a du premier volet 142 est en contact avec la première surface statique 1430 du deuxième volet 143 tandis que l'extrémité libre 143a du deuxième volet 143 est en contact avec la première surface statique 1420 du premier volet 142. Les surfaces 1420, 1421, 1430 et 1431 définissent ensemble une conduite de filière correspondant à une partie de la deuxième portion 1521 ainsi que l'orifice de sortie 141 dans lequel débouche le conduit de filière. Les surfaces sur lesquelles circule le matériau élastomère extrudé étant statiques, la géométrie et les dimensions du conduit de filière ou de l'orifice de sortie 141 sont parfaitement maîtrisées, et ce sans jeu entre les surfaces. On maîtrise ainsi la forme et les dimensions de la bande de matériau élastomère obtenue au niveau de l'orifice de sortie 141.

Comme illustré sur la figure 4, la tête d'extrusion 150 comporte une première extrémité 150a qui est reliée à la sortie 112 du corps fixe 110 et une deuxième extrémité 150b comportant la filière d'extrusion 140. La tête d'extrusion comprend un premier conduit divergent 151 en communication avec la sortie 112 du corps fixe et un deuxième conduit convergent 152 prolongeant le premier conduit jusqu'à l'orifice de sortie 141 de la filière 140.

Le premier conduit divergent 151 comporte ici un nez profilé 1510 maintenue au centre du premier conduit 151 par des bras profilés 1511. Les bras 1511 forment des éléments redresseurs permettant d'interrompre la rotation du matériau élastomère en sortie du corps fixe 110. D'autres types d'élément redresseur, comme par exemple un grille ou similaires, peuvent être utilisés.

Le deuxième conduit 152 comporte des première et deuxième portions convergentes 1520 et 1521, la première portion 1520 s'étendant entre le premier conduit 151 et la deuxième portion 1521. La deuxième portion 1521 s'étend entre un orifice d'entrée 1522 relié à la première portion 1520 et l'orifice de sortie 141 de la filière140. L'orifice d'entrée 1522 présente des dimensions supérieures à celles de l'orifice de sortie 141 de la filière 140, la deuxième portion 1521 présentant une forme variant progressivement entre la forme de l'orifice d'entrée 1522 de la deuxième portion 1521 et l'orifice de sortie 141 de la filière 140. Plus précisément et comme illustré sur les figures 4, 5A à 5C et 6A à 6C, la deuxième portion 1521 du deuxième conduit 152 est formée par une plaque 1523 comportant l'orifice d'entrée 1522 et par deux volets 1524 et 1525, les volets 1524 et 1525 formant la filière 140. L'orifice d'entrée 1522 de la deuxième portion 1521 présente une forme ayant un contour arrondi qui se rétrécie progressivement, ce qui permet de contraindre légèrement le matériau élastomère et d'amorcer ainsi une transition douce entre les première et deuxième portions convergentes 1520 et 1521 du deuxième conduit convergent 152. De même, la suite de la deuxième portion 1521 présente une forme dont le contour évolue progressivement d'un contour arrondi au voisinage de l'orifice d'entrée 1522 à un contour parallélépipédique correspondant à l'orifice de sortie 141 de la filière 140. Par ailleurs, les bords de l'orifice d'entrée 1522 de la deuxième portion 1521 présentent une forme évasée par rapport au centre dudit orifice d'entrée. On ralentit ainsi la vitesse de circulation du matériau élastomère circulant au niveau des bords de l'orifice d'entrée 1522 par rapport au centre dudit orifice. Cela permet d'homogénéiser la vitesse de circulation du matériau élastomère dans la suite de la deuxième portion car, comme celle-ci se rétrécie, le débit du matériau est accéléré au niveau des bords. Le débit du matériau est peu accéléré au niveau du centre de la deuxième portion car la géométrie varie peu à cet endroit.

Le deuxième conduit 152 permet ainsi de contraindre très progressivement le matériau élastomère avant sa sortie de la filière 140, ce qui permet d'obtenir au niveau de l'orifice de sortie 141 de la filière une bande de matériau élastomère qui se déforme et gonfle très peu. On obtient ainsi une bande de matériau élastomère dont la géométrie et les dimensions sont maîtrisées en sortie de filière, ce permet de maîtriser ensuite les dimensions et la qualité du revêtement formé par bobinage de la bande.

Il est ainsi possible d'obtenir une bande de matériau élastomère 50 qui présente également une section transversale en forme de parallélogramme non rectangle. Cette forme de section transversale de la bande 50 permet de former des spires jointives qui, même si elles se chevauchent partiellement afin d'assurer une continuité dans le revêtement de protection thermique 60 ainsi formé, n'entraîne pas de variation d'épaisseur significative à la surface du revêtement. Ce placement avantageux des spires jointives est illustré sur la figure 8 qui montre que la bande 50, grâce à une section transversale en forme de parallélogramme non rectangle, comprend deux bords 51 et 52 formant chacun un biseau. Ainsi, une spire, par exemple la spire Spn de la bande 50, peut être déposée de manière jointive avec la spire déposée précédemment, ici la spire Spn-1, sans augmentation locale significative de l'épaisseur du revêtement 60.

Comme illustré sur la figure 7, l'orifice de sortie 141 de la filière d'extrusion 140, qui présente une forme de parallélogramme non rectangle, comporte deux angles aigus β compris de préférence entre 30° et 45° qui se retrouvent sur la bande de matériau élastomère 50 extrudée par l'orifice 141, les angles β correspondant aux angles formés par les grands côtés 141a et 141ç avec respectivement les petits côtés 141b et 141d du parallélogramme. La base du parallélogramme de l'orifice de sortie 141 correspondant au grand côté 141a ou 141ç du parallélogramme a une longueur I₁₄₁ comprise de préférence entre 30 mm et 90 mm tandis que la hauteur du parallélogramme E₁₄₁ correspondant à l'écartement présent entre les deux grands côtés 141a ou 141c du parallélogramme est comprise de préférence entre 1,5 mm et 30 mm afin de calibrer la bande de matériau élastomère 50 extrudée par l'orifice 141 suivant des dimensions similaires.

Une fois le revêtement de protection thermique déposé, il est possible d'effectuer la polymérisation par cuisson dudit revêtement. Cette cuisson du revêtement peut s'effectuer sous pression ambiante en autoclave. Elle permet de conférer au revêtement des propriétés mécaniques et thermiques optimales.

La fabrication d'un corps de propulseur comprenant une enveloppe résistante munie d'un revêtement interne ou externe de protection thermique va à présent être décrite.

Dans un exemple de réalisation, l'enveloppe résistante du corps de propulseur peut être déposée sur la surface externe d'un revêtement de protection thermique interne déposé sur le mandrin par mise en œuvre du procédé décrit plus haut. Une enveloppe résistante en matériau composite peut ensuite être réalisée sur cette surface externe par enroulement filamentaire d'un matériau fibreux pré-imprégné (par exemple bobinage d'un fil de carbone, de verre ou de polyamide imprégné d'une résine thermodurcissable non polymérisée). Ensuite, il peut être avantageux de réaliser la polymérisation du revêtement simultanément avec la polymérisation du bobinage filamentaire afin d'obtenir le corps de propulseur muni d'un revêtement interne de protection thermique.

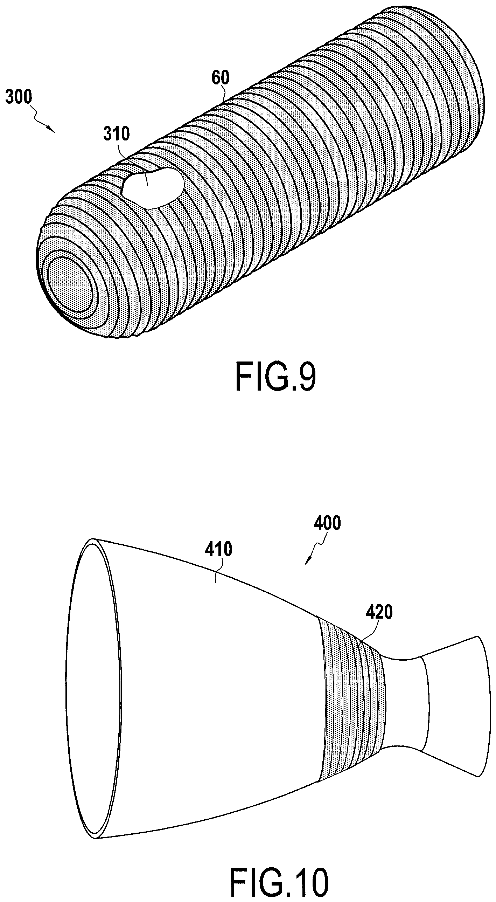

Le procédé selon l'invention peut aussi s'appliquer à la réalisation d'un corps de propulseur muni d'un revêtement externe de protection thermique. Dans ce cas, il est tout d'abord déposé par enroulement filamentaire sur le mandrin le matériau fibreux préimprégné destiné à former l'enveloppe résistante en matériau composite. On réalise le revêtement de protection thermique externe par mise en oeuvre du procédé tel que décrit plus haut. Une polymérisation simultanée du bobinage filamentaire et du revêtement externe de protection thermique déposés peut être effectuée afin d'obtenir le corps de propulseur muni d'un revêtement externe de protection thermique. La figure 9 montre un corps de propulseur 300 comprenant une enveloppe structurale 310 munie d'un revêtement externe de protection thermique 60.

L'invention n'est pas limitée à la réalisation de revêtement de protection thermique sur des corps de propulseur. Elle peut être utilisée pour former un revêtement de protection thermique sur tout type de pièce ou ensemble comme par exemple un ensemble arrière de propulseur comme une tuyère 400 illustrée sur la figure 10 qui comprend un revêtement de protection thermique externe 420 au niveau de la partie haute de son divergent 410, le revêtement étant réalisé conformément au procédé de l'invention.

## Revendications

1. Dispositif d'extrusion (100) destiné à la fabrication d'une bande continue (50) d'un produit profilé en matériau élastomère, le dispositif comprenant un corps fixe (110) contenant au moins une vis (120) entraînée en rotation, une trémie d'alimentation (130) en communication avec une entrée (111) dudit corps et une filière d'extrusion (140) en communication avec une sortie (112) dudit corps, la filière d'extrusion (140) comprenant un orifice de sortie (141) présentant une forme de parallélogramme non rectangle, la forme et les dimensions de l'orifice de sortie étant définies par des surfaces statiques,
**caractérisé en ce que** la filière d'extrusion (140) comprend des premier et deuxième volets (142, 143) maintenus l'un contre l'autre, chaque volet comportant des première et deuxième surfaces statiques (1420, 1421 ; 1430, 1431) formant entre elles un angle différent de 90°, les première et deuxième surfaces statiques (1420, 1421) du premier volet (142) étant maintenues respectivement en vis-à-vis des première et deuxième surfaces statiques (1430, 1431) du deuxième volet (143), les première et deuxième surfaces statiques des premier et deuxième volets définissant un conduit de filière débouchant au niveau de l'orifice de sortie de la filière.

2. Dispositif d'extrusion selon la revendication 1, comprenant une tête d'extrusion (150) comportant une première extrémité (150a) reliée à la sortie (112) du corps fixe (110) et une deuxième extrémité (150b) comportant la filière d'extrusion (140), la tête d'extrusion comprenant un premier conduit divergent (151) en communication avec la sortie (112) du corps fixe et un deuxième conduit convergent (152) prolongeant le premier conduit jusqu'à l'orifice de sortie (141) de la filière (140).

3. Dispositif d'extrusion selon la revendication 2, dans lequel le premier conduit (151) comporte un ou plusieurs éléments redresseurs (1511) aptes à interrompre la rotation d'un matériau en sortie du corps fixe.

4. Dispositif d'extrusion selon la revendication 2 ou 3, dans lequel le deuxième conduit (152) comporte des première et deuxième portions convergentes (1520, 1521), la première portion (1520) s'étendant entre le premier conduit (151) et la deuxième portion (1521), ladite deuxième portion s'étendant entre un orifice d'entrée (1522) relié à la première portion (1520) et l'orifice de sortie (141) de la filière (140), l'orifice d'entrée (1522) présentant des dimensions supérieures à celles de l'orifice de sortie (141) de la filière, la deuxième portion (1521) présentant une forme variant progressivement entre la forme de l'orifice d'entrée (1522) de ladite deuxième portion et l'orifice de sortie (141) de la filière (140).

5. Dispositif d'extrusion selon la revendication 4, dans lequel les bords de l'orifice d'entrée (1522) de la deuxième portion (1521) présentent une forme évasée par rapport au centre dudit orifice d'entrée.

6. Dispositif d'extrusion selon l'une quelconque des revendications 1 à 5, dans lequel l'orifice de sortie (141) de la filière d'extrusion (140) présente une forme de parallélogramme non rectangle comportant deux angles aigus (β) compris entre 30° et 45°.

7. Dispositif d'extrusion selon l'une quelconque des revendications 1 à 6, dans lequel l'orifice de sortie (141) de la filière d'extrusion (140) présente une forme de parallélogramme non rectangle dont la longueur de la base (141a) est comprise entre 30mm et 90mm et dont la hauteur (E₁₄₁) est comprise entre 1,5 mm et 30 mm.

8. Procédé de fabrication d'un revêtement de protection thermique (60) destiné à recouvrir une paroi interne ou externe d'un corps de propulseur ou d'un ensemble arrière de propulseur, le procédé comprenant
- le mélange dans un corps fixe (100) contenant au moins une vis (120) entraînée en rotation d'au moins un matériau élastomère, l'extrusion par une filière d'extrusion (140) du mélange ainsi obtenu sous forme d'une bande continue en matériau élastomère (50),
- dépôt par bobinage d'une pluralité de spires jointives (S_{Pn}, S_{Pn-1}) de la bande en matériau élastomère (50) sur un mandrin (200), la filière d'extrusion (140) comprenant un orifice de sortie (141) présentant une forme de parallélogramme non rectangle, la forme et les dimensions de l'orifice de sortie étant définies par des surfaces statiques sur lesquelles circulent le matériau élastomère,
**caractérisé en ce que** la filière d'extrusion (140) comprend des premier et deuxième volets (142, 143) maintenus l'un contre l'autre, chaque volet comportant des première et deuxième surfaces statiques (1420, 1421 ; 1430, 1431) formant entre elles un angle différent de 90°, les première et deuxième surfaces statiques (1420, 1421) du premier volet (142) étant maintenues respectivement en vis-à-vis des première et deuxième surfaces statiques (1430, 1431) du deuxième volet (143), les première et deuxième surfaces statiques des premier et deuxième volets définissant un conduit de filière débouchant au niveau de l'orifice de sortie de la filière.

9. Procédé selon la revendication 8, comprenant une tête d'extrusion (150) comportant une première extrémité (150a) reliée à la sortie (112) du corps fixe (110) et une deuxième extrémité (150b) comportant la filière d'extrusion (140), la tête d'extrusion comprenant un premier conduit divergent (151) en communication avec la sortie (112) du corps fixe et un deuxième conduit convergent (152) prolongeant le premier conduit jusqu'à l'orifice de sortie (141) de la filière (140).

10. Procédé selon la revendication 9, dans lequel le premier conduit (151) comporte un ou plusieurs éléments redresseurs (1511) aptes à interrompre la rotation d'un matériau en sortie du corps fixe.

11. Procédé selon la revendication 9 ou 10, dans lequel le deuxième conduit (152) comporte des première et deuxième portions convergentes (1520, 1521), la première portion (1520) s'étendant entre le premier conduit (151) et la deuxième portion (1521), ladite deuxième portion s'étendant entre un orifice d'entrée (1522) relié à la première portion (1520) et l'orifice de sortie (141) de la filière (140), l'orifice d'entrée (1522) présentant des dimensions supérieures à celles de l'orifice de sortie (141) de la filière, la deuxième portion (1521) présentant une forme variant progressivement entre la forme de l'orifice d'entrée (1522) de ladite deuxième portion et l'orifice de sortie (141) de la filière (140).

12. Procédé selon la revendication 11, dans lequel les bords de l'orifice d'entrée (1522) de la deuxième portion (1521) présentent une forme évasée par rapport au centre dudit orifice d'entrée.

13. Procédé selon l'une quelconque des revendications 8 à 12, **caractérisé en ce que** l'orifice de sortie (141) de la filière d'extrusion (140) présente une forme de parallélogramme non rectangle comportant deux angles aigus (β) compris entre 30° et 45°.

14. Procédé selon l'une quelconque des revendications 8 à 13, **caractérisé en ce que** l'orifice de sortie (141) de la filière d'extrusion (140) présente une forme de parallélogramme non rectangle dont la longueur de la base (141a) est comprise entre 30mm et 90mm et dont la hauteur (E₁₄₁) est comprise entre 1,5 mm et 30 mm.

## Patentansprüche

1. Extrusionsvorrichtung (100), die zur Herstellung eines ununterbrochenen Streifens (50) eines Profil produkts aus Elastomermaterial bestimmt ist, wobei die Vorrichtung einen festen Körper (110), der mindestens eine drehbar angetriebene Schraube (120) enthält, einen Speisetrichter (130), der mit einem Eingang (111) des Körpers in Verbindung steht, und eine Extrusionsdüse (140) in Verbindung mit einem Ausgang (112) des Körpers umfasst, wobei die Extrusionsdüse (140) eine Ausgangsöffnung (141) umfasst, die eine Form eines nicht rechtwinkligen Parallelogramms aufweist, wobei die Form und die Abmessungen der Ausgangöffnung durch statische Oberflächen definiert sind,
**dadurch gekennzeichnet, dass** die Extrusionsdüse (140) eine erste und eine zweite Klappe (142, 143) umfasst, die gegeneinander gehalten werden, wobei jede Klappe eine erste und eine zweite statische Oberfläche (1420, 1421; 1430, 1431) umfasst, die untereinander einen Winkel bilden, der sich von 90° unterscheidet, wobei die erste und die zweite statische Oberfläche (1420, 1421) der ersten Klappe (142) gegenüber der ersten beziehungsweise der zweiten statischen Oberfläche (1430, 1431) der zweiten Klappe (143) gehalten werden, wobei die erste und die zweite statische Oberfläche der ersten und der zweiten Klappe einen Düsenkanal definieren, der im Bereich der Ausgangsöffnung der Düse mündet.

2. Extrusionsvorrichtung nach Anspruch 1, die einen Extrusionskopf (150) umfasst, der ein erstes Ende (150a), das mit dem Ausgang (112) des festen Körpers (110) verbunden ist, und ein zweites Ende (150b) umfasst, das die Extrusionsdüse (140) umfasst, wobei der Extrusionskopf einen auseinanderlaufenden ersten Kanal (151) in Verbindung mit dem Ausgang (112) des festen Körpers und einen zusammenlaufenden zweiten Kanal (152) umfasst, der den ersten Kanal bis zur Ausgangsöffnung (141) der Düse (140) verlängert.

3. Extrusionsvorrichtung nach Anspruch 2, wobei der erste Kanal (151) ein oder mehrere Leitelemente (1511) umfasst, die geeignet sind, die Drehung eines Materials am Ausgang des festen Körpers zu unterbrechen.

4. Extrusionsvorrichtung nach Anspruch 2 oder 3, wobei der zweite Kanal (152) einen ersten und einen zweiten zusammenlaufenden Abschnitt (1520, 1521) umfasst, wobei der erste Abschnitt (1520) sich zwischen dem ersten Kanal (151) und dem zweiten Abschnitt (1521) erstreckt, der zweite Abschnitt sich zwischen einer Eingangsöffnung (1522), die mit dem ersten Abschnitt (1520) verbunden ist, und der Ausgangsöffnung (141) der Düse (140) erstreckt, wobei die Eingangsöffnung (1522) Abmessungen aufweist, die größer sind als diejenigen der Ausgangsöffnung (141) der Düse, wobei der zweite Abschnitt (1521) eine Form aufweist, die sich allmählich zwischen der Form der Eingangsöffnung (1522) des zweiten Abschnitts und der Ausgangsöffnung (141) der Düse (140) verändert.

5. Extrusionsvorrichtung nach Anspruch 4, wobei die Ränder der Eingangsöffnung (1522) des zweiten Abschnitts (1521) eine in Bezug auf die Mitte der Eingangsöffnung erweiterte Form aufweisen.

6. Extrusionsvorrichtung nach einem der Ansprüche 1 bis 5, wobei die Ausgangsöffnung (141) der Extrusionsdüse (140) eine Form eines nicht rechtwinkligen Parallelogramms aufweist, das zwei spitze Winkel (β) von zwischen 30° und 45° aufweist.

7. Extrusionsvorrichtung nach einem der Ansprüche 1 bis 6, wobei die Ausgangsöffnung (141) der Extrusionsdüse (140) eine Form eines nicht rechtwinkligen Parallelogramms aufweist, bei dem die Länge der Basis (141a) zwischen 30 mm und 90 mm beträgt und dessen Höhe (E₁₄₁) zwischen 1,5 mm und 30 mm beträgt.

8. Verfahren zur Herstellung einer Hitzeschildabdeckung (60), die dazu bestimmt ist, eine Innen- oder Außenwand eines Triebwerkskörpers oder einer Triebwerksheckbaugruppe abzudecken, wobei das Verfahren umfasst:
- Mischen mindestens eines Elastomermaterials in einem festen Körper (100), der mindestens eine Schraube (120) enthält, die drehbar angetrieben wird, Extrusion der so erhaltenen Mischung in der Form eines ununterbrochenen Streifens aus Elastomermaterial (50) durch eine Extrusionsdüse (140),
- Aufbringen einer Vielzahl von nebeneinanderliegenden Windungen (S_{Pn}, S_{Pn-1}) des Streifens aus Elastomermaterial (50) durch Wickeln auf einem Dorn (200), wobei die Extrusionsdüse (140) eine Ausgangsöffnung (141) umfasst, die eine Form eines nicht rechtwinkligen Parallelogramms aufweist, wobei die Form und die Abmessungen der Ausgangsöffnung durch statische Oberflächen definiert sind, auf denen das Elastomermaterial umläuft,
**dadurch gekennzeichnet, dass** die Extrusionsdüse (140) eine erste und eine zweite Klappe (142, 143) umfasst, die gegeneinander gehalten werden, wobei jede Klappe eine erste und eine zweite statische Oberfläche (1420, 1421; 1430, 1431) umfasst, die untereinander einen Winkel bilden, der sich von 90° unterscheidet, wobei die erste und die zweite statische Oberfläche (1420, 1421) der ersten Klappe (142) gegenüber der ersten beziehungsweise der zweiten statischen Oberfläche (1430, 1431) der zweiten Klappe (143) gehalten werden, wobei die erste und die zweite statische Oberfläche der ersten und der zweiten Klappe einen Düsenkanal definieren, der im Bereich der Ausgangsöffnung der Düse mündet.

9. Verfahren nach Anspruch 8, das einen Extrusionskopf (150) umfasst, der ein erstes Ende (150a), das mit dem Ausgang (112) des festen Körpers (110) verbunden ist, und ein zweites Ende (150b) umfasst, das die Extrusionsdüse (140) umfasst, wobei der Extrusionskopf einen auseinanderlaufenden ersten Kanal (151) in Verbindung mit dem Ausgang (112) des festen Körpers, und einen zusammenlaufenden zweiten Kanal (152) umfasst, der den ersten Kanal bis zur Ausgangsöffnung (141) der Düse (140) verlängert.

10. Verfahren nach Anspruch 9, wobei der erste Kanal (151) ein oder mehrere Leitelemente (1511) umfasst, die geeignet sind, die Drehung eines Materials am Ausgang des festen Körpers zu unterbrechen.

11. Verfahren nach Anspruch 9 oder 10, wobei der zweite Kanal (152) einen ersten und einen zweiten zusammenlaufenden Abschnitt (1520, 1521) umfasst, wobei der erste Abschnitt (1520) sich zwischen dem ersten Kanal (151) und dem zweiten Abschnitt (1521) erstreckt, wobei der zweite Abschnitt sich zwischen einer Eingangsöffnung (1522), die mit dem ersten Abschnitt (1520) verbunden ist, und der Ausgangsöffnung (141) der Düse (140) erstreckt, wobei die Eingangsöffnung (1522) Abmessungen aufweist, die größer als diejenigen der Ausgangsöffnung (141) der Düse sind, wobei der zweite Abschnitt (1521) eine Form aufweist, die sich allmählich zwischen der Form der Eingangsöffnung (1522) des zweiten Abschnitts und der Ausgangsöffnung (141) der Düse (140) erstreckt.

12. Verfahren nach Anspruch 11, wobei die Ränder der Eingangsöffnung (1522) des zweiten Abschnitts (1521) eine in Bezug auf die Mitte der Eingangsöffnung erweiterte Form aufweisen.

13. Verfahren nach einem der Ansprüche 8 bis 12, **dadurch gekennzeichnet, dass** die Ausgangsöffnung (141) der Extrusionsdüse (140) eine Form eines nicht rechtwinkligen Parallelogramms aufweist, das zwei spitze Winkel (β) von zwischen 30° und 45° aufweist.

14. Verfahren nach einem der Ansprüche 8 bis 13, **dadurch gekennzeichnet, dass** die Ausgangsöffnung (141) der Extrusionsdüse (140) eine Form eines nicht rechtwinkligen Parallelogramms aufweist, bei dem die Länge der Basis (141a) zwischen 30 mm und 90 mm beträgt und dessen Höhe (E₁₄₁) zwischen 1,5 mm und 30 mm beträgt.

## Claims

1. An extrusion device (100) intended for the manufacture of a continuous strip (50) of a profiled product made of elastomeric material, the device comprising a fixed body (110) containing at least one screw (120) driven in rotation, a feed hopper (130) in communication with an inlet (111) of said body and an extrusion die (140) in communication with an outlet (112) of said body, the extrusion die (140) comprising an outlet port (141) having the shape of a non-rectangular parallelogram, the shape and dimensions of the outlet port being defined by static surfaces,
**characterized in that** the extrusion die (140) comprises first and second flaps (142, 143) held against each other, each flap including first and second static surfaces (1420, 1421; 1430, 1431) forming therebetween an angle different from 90°, the first and second static surfaces (1420, 1421) of the first flap (142) being held respectively opposite the first and second static surfaces (1430, 1431) of the second flap (143), the first and second static surfaces of the first and second flaps defining a die duct opening out at the outlet port of the die.

2. The extrusion device according to claim 1, comprising an extrusion head (150) including a first end (150a) connected to the outlet (112) of the fixed body (110) and a second end (150b) including the extrusion die (140), the extrusion head comprising a first divergent duct (151) in communication with the outlet (112) of the fixed body and a second convergent duct (152) extending the first duct to the outlet port (141) of the die (140).

3. The extrusion device according to claim 2, wherein the first duct (151) includes one or several rectifier elements (1511) able to interrupt the rotation of a material at the outlet of the fixed body.

4. The extrusion device according to claim 2 or 3, wherein the second duct (152) includes first and second convergent portions (1520, 1521), the first portion (1520) extending between the first duct (151) and the second portion (1521), said second portion extending between an inlet port (1522) connected to the first portion (1520) and the outlet port (141) of the die (140), the inlet port (1522) having dimensions greater than those of the outlet port (141) of the die, the second portion (1521) having a shape varying progressively between the shape of the inlet port (1522) of said second portion and the outlet port (141) of the die (140).

5. The extrusion device according to claim 4, wherein the edges of the inlet port (1522) of the second portion (1521) have a flared shape relative to the center of said inlet port.

6. The extrusion device according to any one of claims 1 to 5, wherein the outlet port (141) of the extrusion die (140) has the shape of a non-rectangular parallelogram including two acute angles (β) comprised between 30° and 45°.

7. The extrusion device according to any one of claims 1 to 6, wherein the outlet port (141) of the extrusion die (140) has the shape of a non-rectangular parallelogram whose base (141a) length is comprised between 30 mm and 90 mm and whose height (E₁₄₁) is comprised between 1.5 mm and 30 mm.

8. A method for manufacturing a thermal protective coating (60) intended to cover an inner or outer wall of a thruster body or a rear thruster assembly, the method comprising:
- the mixture in a fixed body (100) containing at least one screw (120) driven in rotation of at least one elastomeric material, the extrusion by an extrusion die (140) of the thus obtained mixture in the form of a continuous strip made of elastomeric material (50),
- deposition by winding of a plurality of contiguous turns (S_{Pn}, S_{Pn-1}) of the strip made of elastomeric material (50) on a mandrel (200), the extrusion die (140) comprising an outlet port (141) having the shape of a non-rectangular parallelogram, the shape and dimensions of the outlet port being defined by static surfaces on which the elastomeric material circulates,
**characterized in that** the extrusion die (140) comprises first and second flaps (142, 143) held against each other, each flap including first and second static surfaces (1420, 1421; 1430, 1431) forming therebetween an angle different from 90°, the first and second static surfaces (1420, 1421) of the first flap (142) being held respectively opposite the first and second static surfaces (1430, 1431) of the second flap (143), the first and second static surfaces of the first and second flaps defining a die duct opening out at the outlet port of the die.

9. The method according to claim 8, comprising an extrusion head (150) including a first end (150a) connected to the outlet (112) of the fixed body (110) and a second end (150b) including the extrusion die (140), the extrusion head comprising a first divergent duct (151) in communication with the outlet (112) of the fixed body and a second convergent duct (152) extending the first duct to the outlet port (141) of the die (140).

10. The method according to claim 9, wherein the first duct (151) includes one or several rectifier elements (1511) able to interrupt the rotation of a material at the outlet of the fixed body.

11. The method according to claim 9 or 10, wherein the second duct (152) includes first and second convergent portions (1520, 1521), the first portion (1520) extending between the first duct (151) and the second portion (1521), said second portion extending between an inlet port (1522) connected to the first portion (1520) and the outlet port (141) of the die (140), the inlet port (1522) having dimensions greater than those of the outlet port (141) of the die, the second portion (1521) having a shape varying progressively between the shape of the inlet port (1522) of said second portion and the outlet port (141) of the die (140).

12. The method according to claim 11, wherein the edges of the inlet port (1522) of the second portion (1521) have a flared shape relative to the center of said inlet port.

13. The method according to any one of claims 8 to 12, **characterized in that** the outlet port (141) of the extrusion die (140) has the shape of a non-rectangular parallelogram including two acute angles (β) comprised between 30° and 45°.

14. The method according to any one of claims 8 to 13, **characterized in that** the outlet port (141) of the extrusion die (140) has the shape of a non-rectangular parallelogram whose base (141a) length is comprised between 30 mm and 90 mm and whose height (E₁₄₁) is comprised between 1.5 mm and 30 mm.
